# EUROPEAN PATENT APPLICATION

(11) **EP 4 286 481 A1**
(43) Date of publication of application: **06.12.2023**
(21) Application number: 21922690.9
(22) Date of filing: 30.12.2021
(51) Int. Cl.: C09C 1/62, B42D 25/20, B42D 25/324

(54) **FLAKY OPTICAL PIGMENT AND PREPARATION METHOD THEREFOR, AND ANTI-COUNTERFEITING ELEMENT**

(30) Priority: 26.01.2021 CN 202110106004
(71) Applicant: Zhongchao Special Security Technology Co., Ltd, Beijing 100070 (CN); China Banknote Printing and Minting Corp., Beijing 100044 (CN)
(72) Inventor: SUN, Kai, Beijing 100070 (CN)
(74) Representative: De Clercq & Partners
(86) International application number: PCT/CN2021/143393
(87) International publication number: WO 2022/161102

(57) **Abstract**

The embodiments of the present application belong to the technical field of pigments. Provided are a flaky optical pigment and a preparation method therefore, and an anti-counterfeiting element. At least part of an area of the flaky optical pigment comprises a sub-wavelength structure, the surface of the sub-wavelength structure is covered with at least one metal layer and at least one dielectric supporting layer, and the metal layer and the dielectric supporting layer are in a structure in which the mental layer and the dielectric supporting layer are alternately arranged one below the other, so that the flaky pigment generates different colors in reflection and transmission directions. The flaky optical pigment provided in the embodiments of the present application has a plurality of color features, such as reflection and transmission, is an optical anti-counterfeiting pigment with an attractive visual appearance, and has a low manufacturing cost.

## Description

### Cross-Reference to Related Application

This application claims priority to Chinese Patent Application No. 202110106004.8 filed to the China National Intellectual Property Administration on January 26, 2021 and entitled "Flaky Optical Pigment, Preparation Method thereof and Anti-Counterfeiting Element", the invention of which is hereby incorporated by reference in its entirety.

### Technical Field

The invention relates to the technical field of pigments, in particular to a flaky optical pigment, a preparation method thereof and an anti-counterfeiting element.

### Background

Metallic flaky pigments have been used in decorative coatings for many years to produce different visual effects, for example, metallic flaky pigments are used in metallic automotive paints. Metallic flaky pigments are generally prepared by the following: a smooth surface of a peel coating provided on a flexible temporary carrier film is vacuum metallized to form a metal film, the peel coating is dissolved to remove the metal film from the flexible temporary carrier film and the metal film is broken into flaky pigments.

In addition to automotive paints, metallic flaky pigments are also used in other coating compositions, paints, enamels, lacquer varnishes, and the like, also including coatings that produce highly reflective metallized surfaces for metallic or mirror-like optical effects. In these coatings, metallic flaky pigments with small particle size which is less than about 50 microns, produce good reflectivity as well as opaqueness necessary to provide complete 100% coverage for the mirror-like effect. It may be that reflective larger flaky powders are generally more spread when used as coatings and, therefore, may not produce opaqueness or covering capacity that is necessary to obtain a highly reflective mirror-like surface.

Metallic flaky pigments having an embossed pattern in the form of a diffraction grating or holographic image pattern produce some glitter effect when used in coatings or printing inks and have been prepared in a preparation method described in U.S. patent No. 5,672,410 of Miekka et al. In the preparation method of the embossed flaky pigments of the patent, controlled particle metallic flaky pigments less than about 50 microns in size are prepared, which may be prepared by the following: different embossing techniques metalize the embossed surface, the metal is stripped to form a dispersion of flaky pigments, and then the dispersion of flaky pigments which are metallic are broken into smaller sized flaky pigments, which are about 10 microns to 50 microns in size. Dispersed metal particles of the smaller sized flaky pigments are subjected to high speed or ultrasonic agitation which breaks the dispersed metal particles into a desired size range without destroying the reflectivity of the smaller sized flaky pigments.

For the field of optical anti-counterfeiting, patents such as US7396401 B2 and US7241489B2 disclose preparation of pigment products with specific shapes and characters, and CN101184565A discloses a method for preparing metal powder with holographic embossment. WO2014/108303a1 discloses a way of aligning magnetically arranged reflective pigments with correspondingly shaped magnets to produce a bright (especially annular) dynamic effect that may include a depth effect.

In the above technology for preparing colored metallic pigments, a color is generated by a diffraction grating or an interference structure. The color of the diffraction grating changes rapidly with a viewing angle, producing mostly unfixed iridescence. The interference structure usually uses a five-layer or seven-layer structure, and the manufacturing cost is high. Meanwhile, both of the above two ways may produce color only in a reflection direction.

### Summary

Some embodiments of the invention provide a flaky optical pigment, which produces different colors in both a reflection direction and a transmission direction.

In order to achieve the above object, the embodiments of the invention provide the flaky optical pigment, at least part area of which includes a subwavelength structure covered with at least one metal layer and at least one dielectric support layer, and the at least one metal layer and the at least one dielectric support layer are alternately stacked up and down, so that the flaky optical pigment produces different colors in the reflection direction and the transmission direction.

In an embodiment mode, a thickness of the flaky optical pigment is less than 1µm, a size of at least one direction of the flaky optical pigment at a cross direction is 5µm to 50µm.

In an embodiment mode, the flaky optical pigment has uniform geometry and dimension.

In an embodiment mode, the subwavelength structure is periodic structure in at least one dimension.

In an embodiment mode, a characteristic size of the subwavelength structure is less than 0.6µm.

In an embodiment mode, the wavelength structure forms a character feature on the flaky optical pigment.

In an embodiment mode, the subwavelength structure is provided on a group of surfaces of microstructures, and a characteristic size of each of the surfaces of microstructures is 5µm to 20µm.

In an embodiment mode, an aggregate thickness of the at least one metal layer is no more than 50 nm.

In an embodiment mode, the at least one metal layer includes a magnetic layer.

In an embodiment mode, the flaky optical pigment produces a color through a principle of surface plasma resonance absorption.

In an embodiment mode, different colors produced in the reflection direction and/or the transmission direction are polarized.

The embodiments of the invention further provide a preparation of the flaky optical pigment, which includes: the subwavelength structure is prepared on a first surface of a substrate; a peeled layer is coated or vacuum evaporated on a surface of the subwavelength structure; the at least one dielectric support layer and the at least one metal layer are vacuum evaporated on the surface of the subwavelength structure, and the at least one metal layer and the at least one dielectric support layer are alternately stacked up and down; and the peeled layer is dissolved to obtain the flaky optical pigment.

The embodiments of the invention further provide an anti-counterfeiting element of a transparent structure, and the anti-counterfeiting element is provided with a carrier and the flaky optical pigment of any of the above provided on the carrier.

In an embodiment mode, the carrier is banknotes, ID cards and bank cards.

Through the above technical solutions, the flaky optical pigment provided by the embodiments of the invention has various color characteristics such as reflection and transmission, and is an optical anti-counterfeiting pigment with attractive visual appearance and low production cost.

Further features and advantages of the embodiments of the invention will be explained in detail in the embodiments which follow.

### Brief Description of the Drawings

The drawings serve to provide a further understanding of the embodiments of the invention and constitute a part of this specification, and together with the following detailed description of the embodiments, serve to explain the embodiments of the invention but do not constitute a limitation of the embodiments of the invention. In the drawings:
Fig. 1 is a two-dimensional structural schematic diagram of a flaky optical pigment provided by an embodiment of the invention.
Figs. 2 (a) and 2 (b) are three-dimensional structural schematic diagrams of a flaky optical pigment provided by an embodiment of the invention.
Fig. 3 is a structural schematic diagram of a second flaky optical pigment provided by an embodiment of the invention.
Fig. 4 is a structural schematic diagram of a third flaky optical pigment provided by an embodiment of the invention.
Fig. 5 is a structural schematic diagram of a fourth flaky optical pigment provided by an embodiment of the invention.
Fig. 6 is a process schematic diagram of a preparation method of a flaky optical pigment provided by an embodiment of the invention.
Fig. 7 is a structural schematic diagram of a fifth flaky optical pigment provided by an embodiment of the invention.
Fig. 8 is a structural schematic diagram of an example of an anti-counterfeiting element provided by an embodiment of the invention.

### Description of Reference Numerals

| | | | |
|---|---|---|---|
| 23. | A subwavelength structure | 22. | A metal layer |
| 21. | A dielectric support layer | 24. | A composite structure layer |
| 12. | An area without an embossed structure | 11. | A microstructure |
| 20. | A substrate | 25. | A fracture area structure |
| 26. | A dip angle of side wall | | |
| 31. | Incident light | 32. | Reflected light |
| 33. | Transmitted light | | |
| 41. | A transparent area | 42. | A pigment applied area |

### Detailed Description of the Embodiments

The detailed description of the embodiments of the invention will be described in detail below with reference to the drawings. It is to be understood that the detailed description of the embodiments described herein are for the purpose of illustrating and explaining the embodiments of the invention only and are not intended to limit the embodiments of the invention.

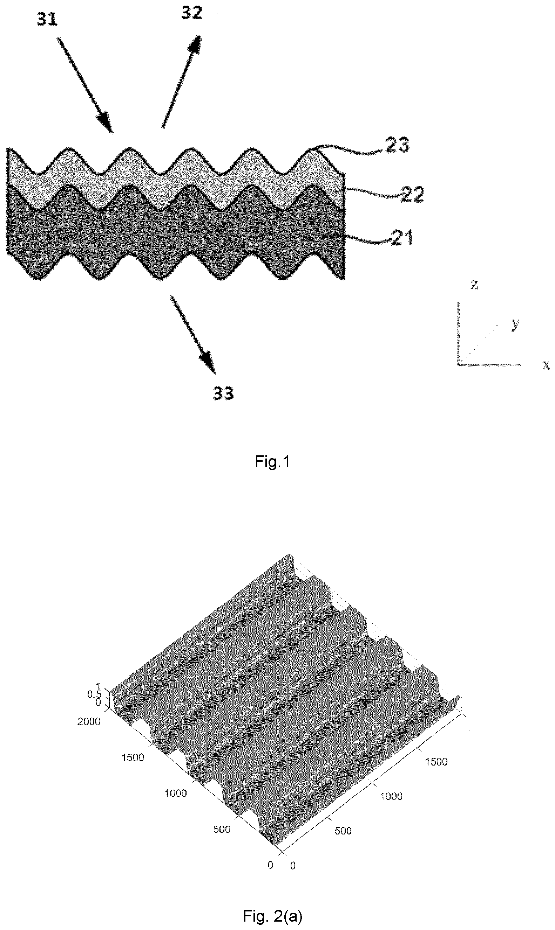

Fig. 1 is a two-dimensional structural schematic diagram of a flaky optical pigment provided by an embodiment of the invention, referring to Fig. 1, for the flaky optical pigment, at least part of area includes a subwavelength structure 23 covered with at least one metal layer 22 and at least one dielectric support layer 21, and the at least one metal layer 22 and the at least one dielectric support layer 21 are alternately stacked up and down, so that the flaky pigment produces different colors in a reflection direction and a transmission direction.

### 1. For the subwavelength structure 23:

In some embodiments, the subwavelength structure 23 is periodic structure in at least one dimension.

In some embodiments, a characteristic size of the subwavelength structure is less than 0.6µm.

For example, the subwavelength structure 23 is a periodic structure, which is similar to a sine curve structure in Fig. 1, a period of the periodic structure is 350 nm and a depth of the periodic structure is 150nm to 170 nm, that is, the characteristic size of the subwavelength structure 23 is less than 0.6µm.

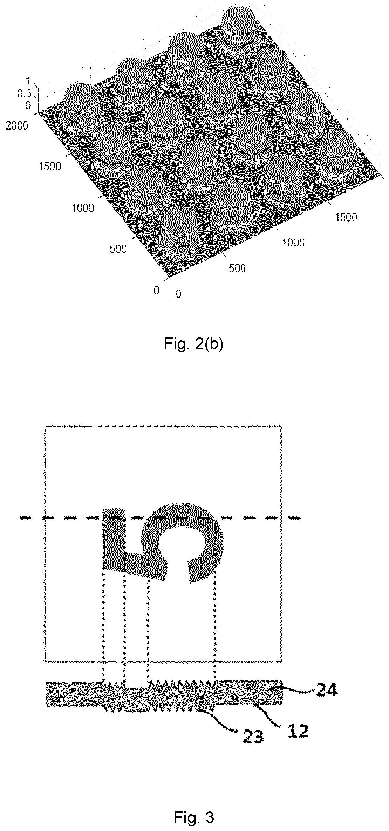

Figs. 2 (a) and 2 (b) are three-dimensional structural schematic diagrams of a flaky optical pigment provided by an embodiment of the invention, the subwavelength structure 23 is a one-dimensional periodic structure or a two-dimensional periodic structure, and the characteristic size in at least one direction is less than 0.6µm. The one-dimensional periodic structure absorbs light of a specific polarization state, but substantially does not absorb light of a polarization state which is orthogonal to the specific polarization state, or produces a substantially complementary absorption effect. Therefore, polarization characteristics of reflected light and transmitted light may be generated by using the one-dimensional periodic structure, which may be observed by a linear polarizer.

For example, the subwavelength structure 23 is the one-dimensional periodic structure or the two-dimensional periodic structure, as shown in Fig. 1, Fig. 2(a) and Fig. 2(b), its morphology is a sine curve or similar sine curve, nano-hole or bulge, circular truncated cone structure, checkerboard structure, etc. A characteristic size of at least one of the two directions (for example, the x-axis direction and the y-axis direction) is in the visible wavelength range, especially less than 0.6µm. In a third direction (such as the z-axis direction), the height is selected in a range of 50nm to 200 nm.

In some embodiments, the wavelength structure 23 forms a character feature on the flaky optical pigment.

For example, the subwavelength structure 23 exists partly or as a whole in the flaky optical pigment and forms characters and other characteristics. Referring to Fig. 3, which shows a flaky optical pigment with characters, and it is a square optical pigment flake with a side length of 20µm and a character "5" in the center; the character "5" is composed of the subwavelength structure 23, and an area outside the character "5" does not have the subwavelength structure 23; the flaky optical pigment has an area without an embossed structure 12 (an area without a flaky optical pigment), the at least one metal layer 22 and the at least one dielectric support layer 21 compose a composite structure layer 24, the subwavelength structure 23 and the area without an embossed structure 12 are substantially covered with the composite structure layer 24 in a conformal manner, which has at least one metal layer 22 and at least one dielectric support layer 21.

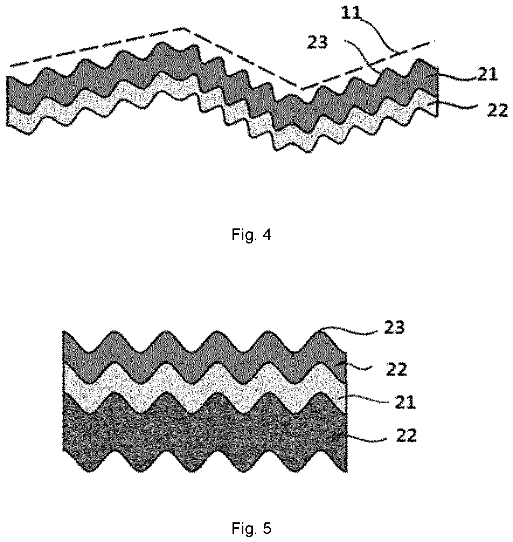

Referring to Fig. 4, the subwavelength structure 23 is provided on a group of surfaces of microstructures 11, and a characteristic size of each of the surfaces of microstructures is 5µm to 20µm.

For example, the subwavelength structure 23 is spread on a group of surfaces of microstructures with the characteristic size of each of the surfaces of microstructures is 5µm to 20µm, the characteristic size is any side length of each of the microstructures 11, and this arrangement enhances or adjusts an angle characteristic of reflection and improve visibility. For example, the subwavelength structure 23 is spread along the orientation of the microstructures 11, and the characteristic size of the surfaces of microstructures is 10µm to 20µm. The surfaces of microstructures is configured to diffuse reflect incident light or produce a dynamic characteristic that vary with an observation angle. The subwavelength structure 23 is covered with the at least one metal layer 22 and the at least one dielectric support layer 23 in a conformal manner, which, for example, is of an Al(10nm)/SiO₂(200nm) structure.

### 2. For the structure of the at least one metal layer 22:

A surface of the subwavelength structure 23 is covered with the at least one metal layer 22, and the at least one metal layer 22 which is periodically fluctuated produces specific absorption for visible light through the principle of surface plasma resonance absorption. A metal of the at least one metal layer 22 is generally selected from Al, Ag, Au, Cu and the like; and in order to produce a color visible through transmission, a thickness of each of the at least one metal layer 22 generally is 5 nm to 30 nm. The at least one metal layer 22 is prepared by thermal evaporation, electron beam evaporation (EBV), or sputtering.

In some embodiments, the at least one metal layer 22 and the at least one dielectric support layer 21 are alternately disposed, which is a structure of "a metal layer 22/ a dielectric support layer 21/ a metal layer 22", or a structure of "a dielectric support layer 21/ a metal layer 22/ a dielectric support layer 21".

In some embodiments, an aggregate thickness of all the at least one metal layer 22 is no more than 50 nm.

For example, a double-layer (multilayer) metal layer 22 is configured to produce different absorption characteristics in front and back. Referring to Fig. 5, the subwavelength structure 23 is covered with the metal layer 22, the dielectric support layer 21, and the metal layer 22 in a conformal manner, which, for example, is of an Al(10nm)/ SiO₂(200nm)/ AI(10nm) structure; or, the subwavelength structure 23 is covered with the dielectric support layer 21, the metal layer 22 and the dielectric support layer 21 in a conformal manner, which, for example, is of a SiO₂(200nm)/ AI(20nm)/ SiO₂(200nm) structure, or a ZnS(100nm)/ AI(20nm)/ ZnS(100nm) structure.

Moreover, when the overall thickness of the at least one metal layer 22 is comparatively small, such as less than 20 nm, the flaky optical pigment produces significantly different colors in the reflection and the transmission direction, especially two complementary colors.

In some embodiments, one of the at least one metal layer includes a magnetic layer.

For example, it is possible to add a magnetic metal layer to the metal layer 22, so that the flaky optical pigment has a steering property in an outside magnetic field.

### 3. For the dielectric support layer 21:

Each of the surfaces of microstructures of the subwavelength structure 23 is also covered with the dielectric support layer 21, which is located on a first surface or a second surface (alternate structure) of the metal layer 22; the dielectric support layer 21 is generally adopt an inorganic dielectric layer which is not easy to bend and deform, and is transparent in the visible range; and the refractive index of the dielectric support layer 21 may also affect the colors in the reflection and the transmission direction, in particular, a high refractive index material may obviously adjust a property of the specific absorption for visible light of the metal layer 22. The specific absorption for visible light through the principle of surface plasma resonance absorption on the surface of the subwavelength structure 23 coated with the metal layer 22 is calculated by FDTD, RCWA and other tools.

In some embodiments, the metal layer 22 and the dielectric support layer 21 also form a Fabry-Perot interference structure such as "a metal layer 22/ a dielectric support layer 21/ a metal layer 22", and also form a filter structure such as "a dielectric support layer 21/ a metal layer 22/ a dielectric support layer 21".

### 4. For the flaky optical pigment:

In some embodiments, the flaky optical pigment has uniform geometry and dimension.

As an example, the flaky optical pigment has uniform geometry and dimension, which is realizing by forming a fracture area in the subwavelength structure 23. The fracture area refers to a relatively deep or steep structure, a depth of the fracture area is usually greater than an aggregate thickness of all coatings, and a side wall of the fracture area forms a dip angle preferably greater than 45° .

In some embodiments, a thickness of the flaky optical pigment is less than 1µm, a size of at least one direction of the flaky optical pigment at a cross direction is 5µm to 50µm.

For example, an aggregate thickness of the flaky pigment is usually less than 1µm, in an embodiment, the overall thickness of the flaky pigment is less than 500 nm; the size of at least one direction of the flaky optical pigment (for example, the x direction or the y direction) is greater than 5µm, and a ratio of a side length (for example, the y direction) to a thickness (for example, the z direction) is better than 5 or 10.

In some embodiments, the flaky optical pigment produces a color through the principle of surface plasma resonance absorption.

In some embodiments, different colors produced in the reflection direction and the transmission direction are polarized, different colors produced in the reflection direction or the transmission direction is polarized.

For example, referring to Fig. 1, under an irradiation of incident light 31, a upper surface and a lower surface of the metal layer 22 absorb part of light waves through plasma resonance absorption, giving reflected light 32 an orange color and transmitted light 33 a blue color. The flaky pigment is of a shape substantially the same in size in two dimensions (such as x direction and y direction), and also is of a strip shape. The flaky pigment of the strip shape is used in combination with a one-dimensional subwavelength structure 23, and when the flaky pigment of the strip shape with the one-dimensional subwavelength structure 23 is spread on the carrier, directional arrangement is formed in a magnetic field or naturally, then a directional arrangement of the one-dimensional subwavelength structure 23 is generated, and such directional arrangement is conducive to the generation of polarized reflected or transmitted light.

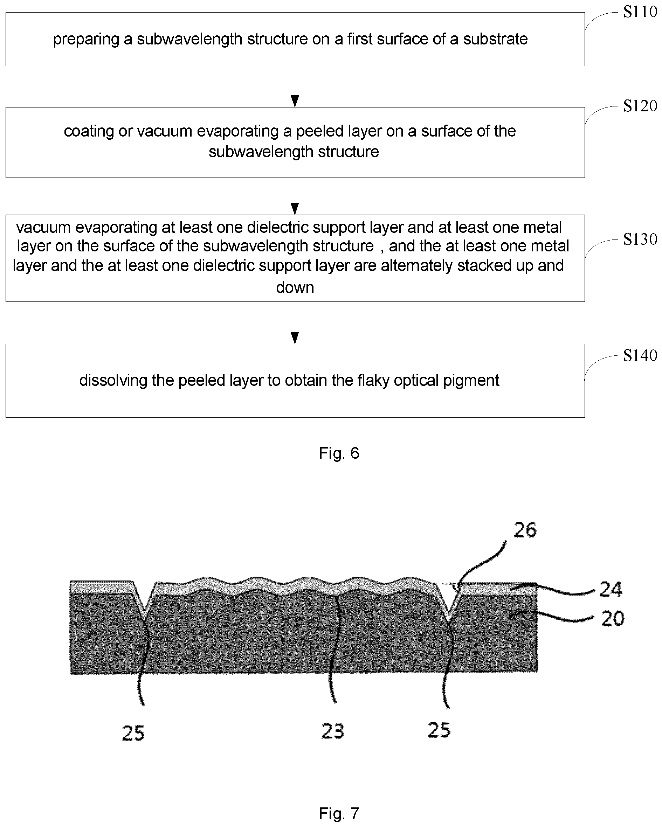

Fig. 6 is a process schematic diagram of a preparation method of a flaky optical pigment provided by an embodiment of the invention. Referring to Fig. 6, the preparation method of the flaky optical pigment may include the following steps.

In S110, a subwavelength structure is prepared on a first surface of a substrate.

The substrate is a flexible, foldable, heat-resistant polymer film, more specifically, in some embodiments, the substrate is a biaxial oriented PET, such as a polyester film Mylar of American Hoechst or a film of Hostaphan. More specifically, in some embodiments, the polymer film has an extremely smooth surface and is substantially free of adhesive fine-grained materials, such as packing particles with improving sliding properties generally. More specifically, in some embodiments, the substrate carrier film of the embodiments of the invention is free of smoothness additives.

In S120, a peeled layer is coated or vacuum evaporated on a surface of the subwavelength structure.

More specifically, in some embodiments, a thickness of the peeled layer is very small, or which does not have obvious influence on a morphology of the subwavelength structure. The peeled layer is produced by nano-coating or vacuum evaporation, a material of the peeled layer is an inorganic material dissolved in an aqueous solution, an organic material dissolved in an alcohols or ketones solution, or an organic material capable of being dissolved in water, and a water-alcohol mixture.

In S130, at least one dielectric support layer and at least one metal layer are vacuum evaporated on each of the surfaces of microstructures of the subwavelength structure, and the at least one metal layer and the at least one dielectric support layer are alternately stacked up and down.

The related structures of the subwavelength structure, the dielectric support layer and the metal layer refer to the flaky optical pigment described above, which will not be repeated here.

In S140, the peeled layer is dissolved to obtain the flaky optical pigment.

Generally, the flaky optical pigment obtained by dissolution needs to be crushed by ultrasonic vibration or air impact, so as to reach an appropriate particle size.

Fig. 7 illustrates an embossed structure prepared by a uniformly shaped flaky optical pigment, and the preparation method of the flaky optical pigment of steps S110-S140 is further described in combination with Fig. 7. A subwavelength structure 23 and a fracture area structure 25 are embossed on a substrate 20. The substrate is a PET material with a thickness of 19µm, a period of the subwavelength structure 23 is 300 nm and a depth is 100 nm, a width of the fracture area structure 25 is 1µm and a depth is 1µm, and a dip angle 26 of its side wall is 40 °. A composite structure layer 24 of a metal layer 22 and a dielectric support layer 21 is covered with the fracture area structure 25 and the subwavelength structure 23 in a conformal manner. During a stripping process, the fracture area structure25 enables a thickness of a coating to be decreased and the strength weakened, which is better than other areas to disconnect, so as to form a uniform shape.

Therefore, the flaky optical pigment provided by the embodiments of the invention has various color characteristics such as reflection and transmission, and is an optical anti-counterfeiting pigment with attractive visual appearance and low production cost. The flaky optical pigment is used on carriers including banknotes, especially paper banknotes, polymer banknotes or ID cards, such as credit cards, bank cards, cash cards, authorization cards, personal ID cards or passport personal pages, and is prepared into ink which is coated or printed on the carriers, specifically.

Therefore, the embodiments of the invention further provide an anti-counterfeiting element of a transparent structure, and the anti-counterfeiting element is provided with a carrier and the flaky optical pigment described above provided on the carrier.

More specifically, in some embodiments, the carrier is banknotes, ID cards and bank cards.

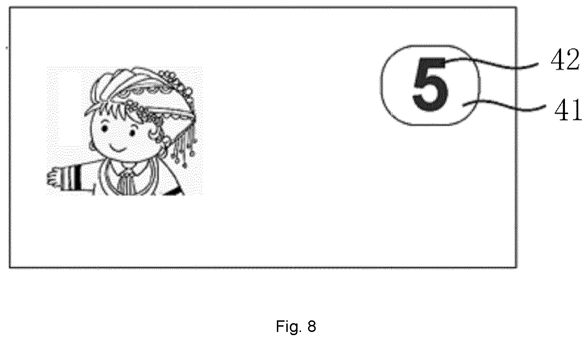

Fig. 8 illustrates a banknote with the above flaky optical pigment. The banknote has a transparent area 31, which is convenient for transparent observation. The transparent area 41 is a part of a plastic substrate of the banknote, or a punch in the paper. The transparent area 41 has a pigment applied area 42 (flaky optical pigment). The pigment applied area 42 is a printing area directly on the transparent plastic substrate and may also cover a transparent punch of a paper in a labeling manner. A particle size of the pigment suitable for banknote printing is generally 5µm to 50µm. It is to be notated that the carrier of the anti-counterfeiting element of the embodiments of the invention is not limited to banknotes, but it is configured for a variety of film elements, such as labels on goods and packaging, or anti-counterfeiting documents, ID cards, passports, credit cards, health cards, etc.

It is to be noted that terms "include" and "contain" or any other variant thereof is intended to cover nonexclusive inclusions herein, so that a process, method, object or device including a series of elements not only includes those elements but also includes other elements which are not clearly listed or further includes elements intrinsic to the process, the method, the object or the device. An element defined by the statement "includes a..." does not, without more constraints, preclude the existence of additional identical elements in the process, method, article, or apparatus that comprises the element.

The foregoing is merely the embodiments of the invention and is not intended to limit the invention. Various modifications and variations of the invention may be available for those skilled in the art. Any modifications, equivalent replacements, improvements and the like made within the spirit and principle of the invention shall fall within the scope of claims of the invention.

## Claims

1. A flaky optical pigment, wherein at least part of area of the flaky optical pigment comprises a subwavelength structure covered with at least one metal layer and at least one dielectric support layer, and the at least one metal layer and the at least one dielectric support layer are alternately stacked up and down, so that the flaky optical pigment produces different colors in a reflection direction and a transmission direction.

2. The flaky optical pigment as claimed in claim 1, wherein a thickness of the flaky optical pigment is less than 1µm, a size of at least one direction of the flaky optical pigment at a cross direction is 5µm to 50µm.

3. The flaky optical pigment as claimed in claim 1, wherein the flaky optical pigment has uniform geometry and dimension.

4. The flaky optical pigment as claimed in claim 1, wherein the subwavelength structure is periodic structure in at least one dimension.

5. The flaky optical pigment as claimed in claim 1 or 4, wherein a characteristic size of the subwavelength structure is less than 0.6µm.

6. The flaky optical pigment as claimed in claim 1 or 4, wherein the wavelength structure forms a character feature on the flaky optical pigment.

7. The flaky optical pigment as claimed in claim 1, wherein the subwavelength structure is provided on a group of surfaces of microstructures, and a characteristic size of each of the surfaces of microstructures is 5µm to 20µm.

8. The flaky optical pigment as claimed in claim 1, wherein an aggregate thickness of the at least one metal layer is no more than 50 nm.

9. The flaky optical pigment as claimed in claim 1 or 8, wherein one of the at least one metal layer comprises a magnetic layer.

10. The flaky optical pigment as claimed in claim 1, wherein the flaky optical pigment produces a color through a principle of surface plasma resonance absorption.

11. The flaky optical pigment as claimed in claim 1, wherein different colors produced in the reflection direction and/or the transmission direction are polarized.

12. A preparation method of a flaky optical pigment, comprising:
preparing a subwavelength structure on a first surface of a substrate;
coating or vacuum evaporating a peeled layer on a surface of the subwavelength structure;
vacuum evaporating at least one dielectric support layer and at least one metal layer on the surface of the subwavelength structure, and the at least one metal layer and the at least one dielectric support layer are alternately stacked up and down; and
dissolving the peeled layer to obtain the flaky optical pigment.

13. An anti-counterfeiting element, wherein the anti-counterfeiting element is of a transparent structure, and the anti-counterfeiting element is provided with a carrier and the flaky optical pigment as claimed in any of claims 1-11 provided on the carrier.

14. The anti-counterfeiting element as claimed in claim 13, wherein the carrier is banknotes, ID cards and bank cards.
